# EUROPÄISCHE PATENTSCHRIFT

(11) **EP 1 070 259 B1**
(45) Veröffentlichungstag und Bekanntmachung des Hinweises auf die Patenterteilung: **21.06.2006**
(21) Anmeldenummer: 99963188.0
(22) Anmeldetag: 03.11.1999
(51) Int. Cl.: G01P 3/487, G01P 1/00, H02K 29/14

(54) **DREHUNGSSENSOR**
ROTATION SENSOR
CAPTEUR DE ROTATION

(30) Priorität: 09.02.1999 DE 19905274
(43) Veröffentlichungstag der Anmeldung: 24.01.2001
(73) Patentinhaber: ROBERT BOSCH GMBH, 70442 Stuttgart (DE)
(72) Erfinder: GOEDECKE, Martin, D-77815 Bühl (DE)
(86) Internationale Anmeldenummer: PCT/DE1999/003507
(87) Internationale Veröffentlichungsnummer: WO 2000/048006

(56) Entgegenhaltungen:
- EP-A- 0 821 240
- DE-A- 19 625 478
- PATENT ABSTRACTS OF JAPAN vol. 016, no. 497 (E-1279), 14. Oktober 1992 (1992-10-14) & JP 04 183245 A (MATSUSHITA ELECTRIC IND CO LTD), 30. Juni 1992 (1992-06-30)

## Beschreibung

### Stand der Technik

Die Erfindung geht aus von einem Drehungssensor mit einem auf einem Rotationselement, insbesondere auf einer Welle eines motorischen Antriebs, sitzenden Impulsgeber der im Oberbegriff des Anspruchs 1 definierten Gattung.

Der Begriff Drehungssensor wird nachfolgend als Synonym für Drehzahl oder Drehwinkelmesser verwendet, die am häufigsten mit feststehenden Hallsensoren oder drehenden Ringmagneten, die in Umfangsrichtung sich abwechselnde Nord- und Südpole besitzen, realisiert werden. Mit analogen Hallsensoren lassen sich dabei Drehwinkel und mit digitalen Hallsensoren Drehzahlen direkt messen. Aus Drehzahl oder Drehwinkel lassen sich wiederum weitere Meßgrößen ableiten, wie Drehweg oder Hubweg.

Ein bekannter Drehungssensor dieser Art (EP 0 821 240 A1) ist in einem Wälzlager angeordnet, wobei der Impulsgeber auf dem mit einer Welle drehfest verbundenen Lagerinnenring sitzt und der die Impulse kontaktlos sensierende Aufnehmer an dem feststehenden Außenring des Wälzlagers befestigt ist. Der aus einem Plastoferrit hergestellte Ringmagnet des Impulsgebers weist einen hohlen Magnetkörper mit über den Umfang aufeinanderfolgenden Nord- und Südpolen auf und erzeugt bei seiner Drehung eine Änderung des magnetischen Feldes bezüglich eines Fixpunktes. Diese Magnetfeldänderungen werden vom feststehenden Aufnehmer in elektrische Signale transformiert. Zur Befestigung des Impulsgebers auf dem Innenring des Wälzlagers sitzt der Ringmagnet drehfest auf der als dünne Blechhülse aufgeführten Metallbuchse, was durch eine Umbördelung des Hülsenrands auf die ringförmige Stirnseite des hohlzylindrischen Magnetkörpers bewerkstelligt ist. Die Blechhülse ist ihrerseits auf die äußere Oberfläche des Innenrings des Wälzlagers aufgepreßt.

Bei einem ebenfalls bekannten Drehungssensor der eingangs genannten Art (EP 0 601 228 B1) ist der Ringmagnet des Impulsgebers aus als Pulver zur Verfügung stehenden magnetisierbaren Partikeln und einer Bindung aus thermoplastischem Werkstoff hergestellt. Hierbei ist der Anteil von Pulver aus magnetisierbaren Partikeln möglichst groß gewählt, so daß der im Spritzgußverfahren geformte Ringmagnet möglichst deutliche Signale im Aufnehmer auszulösen vermag. Dadurch ist aber der Magnetkörper spröde, weshalb der Magnetkörper einen Innendurchmesser erhält, der in Kombination mit dem Durchmesser der Welle eines Antriebsmotors einen Schiebesitz ergibt, und verklebt den Magnetkörper mit der Welle. Nachteilig ist dabei, daß der Klebstoff Lösungsmittel und/oder andere Chemikalien enthält und zum Festwerden lange Zeit benötigt.

Zur Vermeidung des Verklebens des hohlzylindrischen Magnetkörpers auf der Welle ist in der EP 0 601 228 BI bereits vorgeschlagen, ein Halteteil, das mit der Welle gepaart eine Preßsitzpassung bildet, zur Drehmomentübertragung von der Welle auf den hohlzylindrischen Magnetkörper zu verwenden. Die Übertragung erfolgt hier durch formschlüssig wirkende Mittel, z.B. durch Arme, die an den freien Enden axial abstehende Haken aufweisen und sich durch im hohlzylindrischen Magnetkörper vorgesehene Nuten erstrecken. Dieses Halteteil ist zusammen mit den Armen und Haken einstückig aus thermoplastischem Werkstoff spritzgeformt.

Die Schrift JP 04183245 zeigt einem Drehungssensor, bei dem eine Trägerbuchse aus Gieβharz mit einem auf ihr angebrachten Magneten auf eine Motorwelle aufgepresst ist.

### Vorteile der Erfindung

Der erfindungsgemäße Drehungssensor mit den Merkmalen des Anspruchs 1 hat den Vorteil, daß die beim Kleben auftretenden Fertigungsprobleme vermieden sind und der Impulsgeber fertigungstechnisch einfach hergestellt werden kann. Die Preßpassung sorgt für eine möglichst genaue Ausrichtung des Ringmagneten auf dem Rotationselement und die Metallbuchse für eine zuverlässige drehfeste Verbindung des Ringmagneten mit dem Rotationselement, die in dem aus dem Ringmagneten vorstehenden Buchsenabschnitt in fertigungstechnisch günstiger Weise hergestellt werden kann. Bevorzugt ist dabei zwischen dem z.B. als gelagerte Welle ausgebildete Rotationselement und der Metallbuchse eine Spielpassung vorgesehen, damit beim Montieren die Lagerstelle auf der Welle nicht beschädigt wird. Falls der gesamte Drehungssensor nicht über eine Lagerstelle geschoben werden muß, kann eine Übergangs- ode Preßpassung verwendet werden.

Die starre Verbindung der Buchse mit dem Rotationselement innerhalb des aus dem Ringmagneten vorstehenden Buchsenabschnitts sowie die Ausbildung der Formschlußelemente auf dem Umfang der Metallbuchse kann in verschiedener Weise ausgeführt werden.

Gemäß einer bevorzugten Ausführungsform der Erfindung erfolgt die Befestigung des Buchsenabschnitts auf dem Rotationselement durch Preß-Widerstandsschweißen, dem sog. Hot-Staking, bei dem auf dem Buchsenabschnitt mittels an diesen radial angesetzter Elektroden sowohl eine Zuspannkraft als auch ein elektrischer Strom aufgebracht wird.

Gemäß weiterer vorteilhafter Ausführungsformen der Erfindung kann die Verbindung zwischen Buchsenabschnitt und Rotationselement auch durch kraftschlüssige Verpressung des Buchsenabschnitts auf dem Rotationselement oder durch Formschluß zwischen dem Buchsenabschnitt und dem Rotationselement vorgenommen werden.

Gemäß vorteilhafter Ausführungsform der Erfindung sind die Formelemente auf dem Umfang der Metallbuchse zur Herstellung des Formschlusses zwischen dieser und dem Ringmagneten als Rändelung, Axialnuten, Kerbverzahnung u.dgl., ausgeführt.

### Zeichnung

Die Erfindung ist anhand von in der Zeichnung dargestellten Ausführungsbeispielen in der nachfolgenden Beschreibung näher erläutert. Es zeigen:
- Fig. 1: eine Stirnansicht eines Impulsgebers eines Drehungssensors in Richtung Pfeil I in Fig. 2,
- Fig. 2: einen Schnitt längs der Linie II-II in Fig. 1,
- Fig. 3: eine Stirnansicht eines modifizierten Impulsgebers in Richtung Pfeil III in Fig. 4,
- Fig. 4: einen Schnitt längs der Linie IV-IV in Fig. 3,
- Fig. 5 bis 8: jeweils eine gleiche Darstellung wie in Fig. 4 gemäß weiterer Ausführungsbeispiele des Impulsgebers.

### Beschreibung der Ausführungsbeispiele

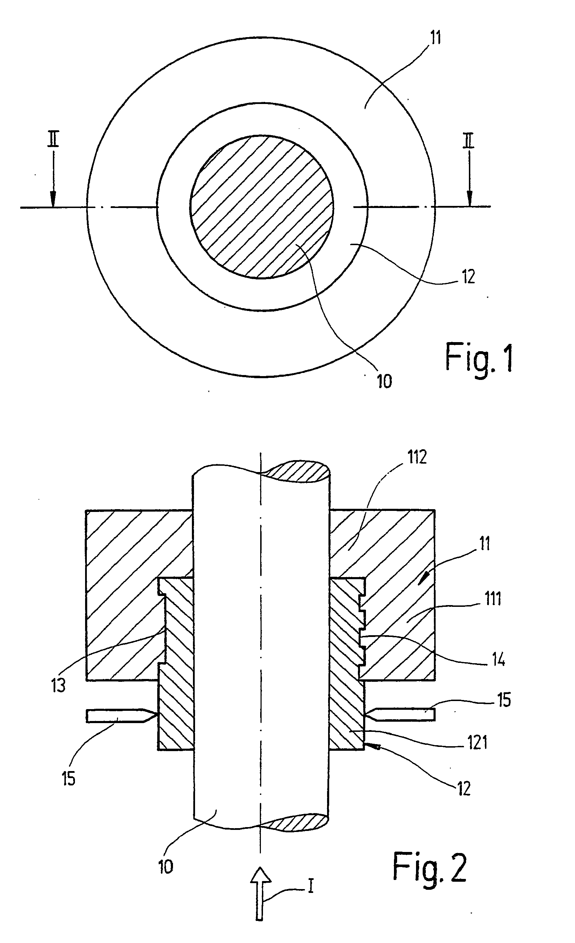

Der in Fig. 1 und 2 in Stirnansicht und Schnitt dargestellte Impulsgeber für einen Drehungssensor ist auf der Antriebswelle 10 eines motorischen Antriebs, z.B. eines Elektromotors für einen Fensterheber eines Kraftfahrzeugs, befestigt. Er weist einen als Spritzteil gefertigten Ringmagneten 11 aus Plastoferrit mit über den Umfang sich abwechselnden Nord- und Südpolen auf und ist drehfest und axial unverschieblich mit der Welle 10 verbunden. Hierzu ist der Ringmagnet 11 mit einem ersten, axialen Ringabschnitt 111 auf einer Metallbuchse 12 formschlüssig aufgenommen und mit einem einen kleineren Innendurchmesser aufweisenden zweiten Ringabschnitt 112 mit Preßpassung auf die Welle 10 aufgeschoben. Der Formschluß zwischen Buchse und erstem Ringabschnitt 111 ist durch auf den Außenumfang der Buchse 12 an- oder eingearbeitete Formelemente hergestellt, auf die der Ringmagnet 11 durch Einlegen der Metallbuchse 12 in die Spritzform aufgespritzt ist.

In Fig. 2 sind zwei Ausführungsbeispiele für Formelemente dargestellt. In der linken Hälfte der Schnittdarstellung weisen die Formelemente mindestens eine Axialnut 13 auf, wobei bevorzugt mehrere Axialnuten 13 über den Umfang der Metallbuchse 12 verteilt vorgesehen werden. In der rechten Symmetriehälfte der Darstellung der Fig. 2 sind die Formelemente als eine Außenverzahnung 14 ausgeführt. Die Ausführung der Formelemente als Rändelung ist ebenso möglich. Die Metallbuchse 12 ragt mit einem axialen Buchsenabschnitt 121 aus dem Ringmagneten 11 hervor und ist in diesem Buchsenabschnitt 121 auf der Welle 10 axial und radial unverschieblich befestigt.

Im Ausführungsbeispiel der Fig. 2 erfolgt die Befestigung des Buchsenabschnitts 121 auf der Welle 10 durch Preß-Widerstandsschweißen (Hot-Staking), bei dem auf den Buchsenabschnitt 121 mittels an diesem radial angesetzter Elektroden 15 sowohl eine Zuspannkraft als auch ein elektrischer Strom aufgebracht wird.

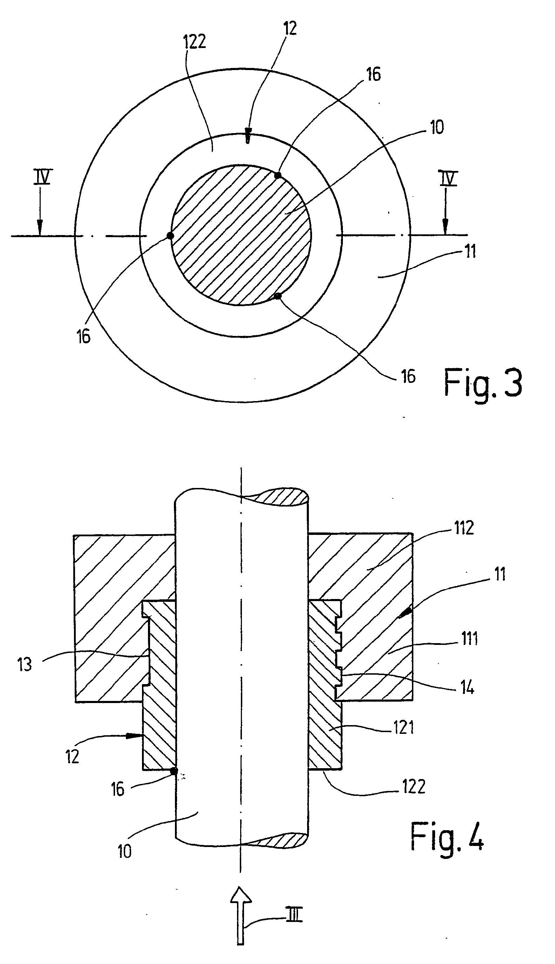

Bei dem in Fig. 3 und 4 dargestellten Ausführungsbeispiel erfolgt die Befestigung des Buchsenabschnittes 121 auf der Welle 10 durch Verschweißen der Stirnseite 122 des Buchsenabschnitts 121 auf der Welle 10. Im Ausführungsbeispiel der Fig. 3 und 4 sind insgesamt drei Schweißpunkte 16 über den Umfang des Buchsenabschnitts 121 gleichmäßig verteilt angeordnet, die Anzahl der Schweißpunkte 16 wird jedoch abhängig von der geforderten Festigkeit der Verbindung variiert.

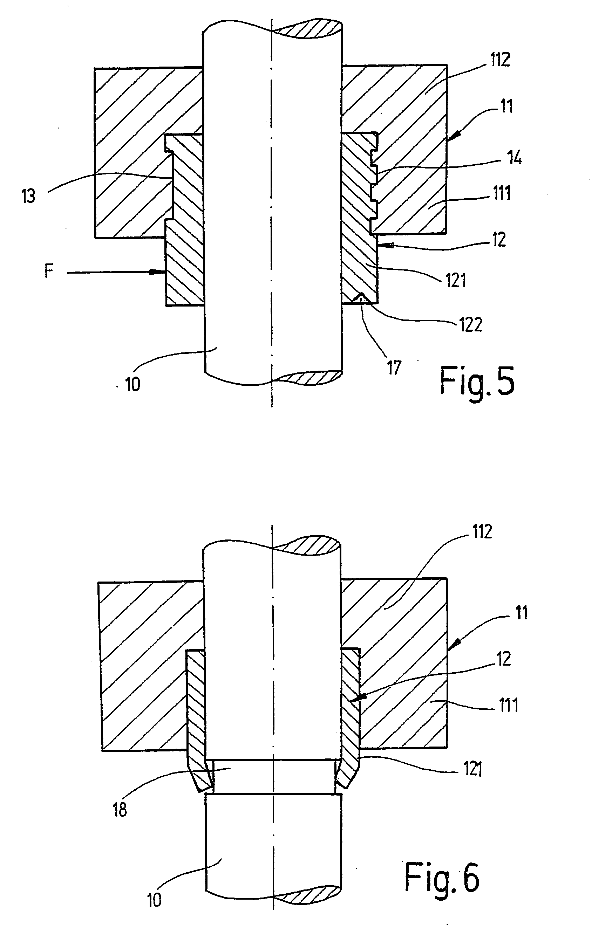

Im Ausführungsbeispiel des Impulsgebers gemäß Fig. 5 erfolgt die Befestigung des Buchsenabschnitts 121 auf der Welle 10 durch kraftschlüssiges Verpressen des Buchsenabschnitts 121 auf der Welle 10. Hierzu werden, wie in der linken Symmetriehälfte der Fig. 5 angedeutet ist, punktuell oder flächig wirkende Preßkräfte F radial auf den Buchsenabschnitt 121 aufgebracht. Wie in der rechten Symmetriehälfte der Fig. 5 angedeutet ist, kann die Verpressung des Buchsenabschnitts 121 auf der Welle 10 auch durch Kerbung erfolgen, wozu in die ringförmige Stirnseite 122 des Buchsenabschnitts 121 Kerben 17 eingedrückt oder eingeschlagen werden.

In dem Ausführungsbeispiel des Impulsgebers gemäß Fig. 6 erfolgt die Verpressung des Buchsenabschnitts 121 auf der Welle 10 durch eine umlaufende Bördelverbindung, bei der das freie Ende des Buchsenabschnitts 121 in eine in die Welle 10 eingearbeitete Ringnut 18 eingebördelt ist.

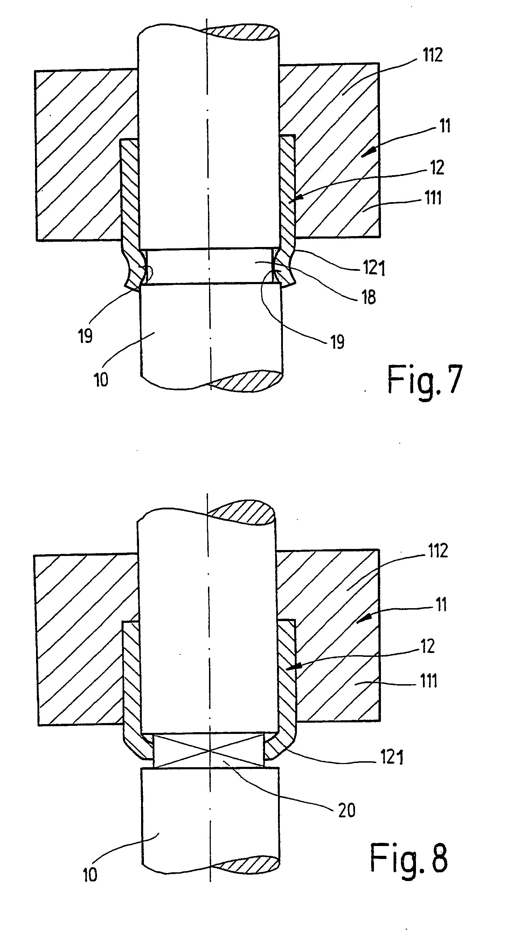

Bei dem in Fig. 7 dargestellten Ausführungsbeispiel des Impulsgebers erfolgt die Verpressung des Buchsenabschnitts 121 auf der Welle 10 durch eine umlaufende Sickenverbindung, bei der eine Vielzahl von aus dem Buchsenabschnitt 121 über den Umfang verteilt radial ausgedrücktern oder ausgestemmten Sicken 19 in eine in der Welle 10 eingearbeitete Ringnut 18 eingepreßt ist.

Bei dem Ausführungsbeispiel des Impulsgebers gemäß Fig. 8 ist die Befestigung des Buchsenabschnitts 121 an der Welle 10 durch Formschluß vorgenommen. Der Formschluß erfolgt wiederum mittels einer Bördelverbindung, bei der das freie Ende des Buchsenabschnitts 121 in einen in die Welle 10 eingestochenen Abschnitt mit mindestens einer als Sekante ausgeführten Abschnittsfläche 20 eingebördelt ist. Im Ausführungsbeispiel der Fig. 8 ist der Abschnitt als Vierkant ausgebildet, so daß insgesamt vier rechtwinklig zueinander ausgerichtete Abschnittsflächen 20 an der Welle 10 vorhanden sind.

In den Ausführungsbeispielen der Fig. 6 - 8 ist auf eine Darstellung des Formschlusses zwischen dem Ringmagneten 11 und dem Buchsenabschnitt 121 der Metallbuchse 12 verzichtet. Er ist aber in gleicher Form wie bei den Ausführungsbeispielen gemäß Fig. 1 - 5 vorhanden.

## Patentansprüche

1. Drehungssensor mit einem auf einem Rotationselement (10), insbesondere auf einer Welle eines motorischen Antriebs, sitzenden Impulsgeber, der einen als Spritzteil gefertigten Ringmagneten (11), insbesondere aus Plastoferrit, und eine den Ringmagneten (11) formschlüssig aufnehmende Metallbuchse (12) aufweist, die auf das Rotationselement (10) koaxial aufgeschoben und an diesem radial und axial unverschiebbar festgelegt ist, **dadurch gekennzeichnet, daß** der Ringmagnet (11) mit einem ersten Ringabschnitt (111) auf der Buchse (12) aufgenommen ist und mit einem einen kleineren Innendurchmesser aufweisenden zweiten Ringabschnitt (112) mit Preßpassung auf dem Rotationselement (10) sitzt, daß der Formschluß zwischen Buchse (12) und erstem Ringabschnitt (111) durch auf den Außenumfang der Buchse (12) angearbeitete Formelemente (13,14) hergestellt ist, auf die der Ringmagnet (11) aufgespritzt ist, und daß die Buchse (12) im Bereich eines aus dem Ringmagneten (11) stirnseitig vorstehenden Buchsenabschnitts (121) auf dem Rotationselement (10) befestigt ist.

2. Sensor nach Anspruch 1, **dadurch gekennzeichnet, daß** zwischen der Buchse (12) und dem Rotationselement (10) eine Spielpassung vorgesehen ist.

3. Sensor nach Anspruch 1 oder 2, **dadurch gekennzeichnet, daß** die Befestigung des Buchsenabschnitts (121) auf dem Rotationselement (10) durch zumindest punktuelles Verschweißen der Stirnseite (122) des Buchsenabschnitts (121) auf dem Rotationselement (10) vorgenommen ist.

4. Sensor nach Anspruch 1 oder 2, **dadurch gekennzeichnet, daß** zur Befestigung des Buchsenabschnitts (121) auf dem Rotationselement (10) der Buchsenabschnitt (121) kraftschlüssig auf dem Rotationselement (10) verpreßt ist.

5. Sensor nach Anspruch 4, **dadurch gekennzeichnet, daß** die Verpressung durch in die ringförmige Stirnseite (122) de Buchsenabschnitts (121) eingedrückte oder eingeschlagene Kerben (17) vorgenommen ist.

6. Sensor nach Anspruch **dadurch gekennzeichnet, daß** die Verpressung mittels einer auf dem Buchsenabschnitt (121) umlaufenden Sickenverbindung vorgenommen ist, bei der aus dem Buchsenabschnitt (121) über dessen Umfang verteilt radial ausgedrückte, Sicken(19) in eine in das Rotationselement (10) eingearbeitete Ringnut (18) eingepreßt sind.

7. Sensor nach Anspruche 4, **dadurch gekennzeichnet, daß** die Verpressung mittels einer Bördelverbindung vorgenommen ist, bei der das freie Ende des Buchsenabschnitts (121) in eine in das Rotationselement (10) eingearbeitete Ringnut (18) eingebördelt ist.

8. Sensor nach Anspruch 1 oder 2, **dadurch gekennzeichnet, daß** die Befestigung des Buchsenabschnitts (121) auf dem Rotationselement (10) durch Formschluß vorgenommen ist.

9. Sensor nach Anspruch 8, **dadurch gekennzeichnet, daß** der Formschluß mittels einer Bördelverbindung hergestellt ist, bei der das freie Ende des Buchsenabschnitts (121) in einen an dem Rotationselement (10) eingestochenen Abschnitt mit mindestens einer als Sekante ausgeführten Abschnittsfläche (20) eingebördelt ist.

10. Sensor nach einem der Ansprüche 1 - 9, **dadurch gekennzeichnet, daß** die Formelemente zur Herstellung des Formschlusses zwischen Metallbuchse (10) und erstem Ringabschnitt (111) des Ringmagneten (11) als Rändelung, Axialnuten (13) oder Kerbverzahnung (14) u.dgl., ausgeführt sind.

## Claims

1. Rotation sensor having a pulse encoder which is seated on a rotation element (10) (in particular on a shaft of a motor or engine drive) and has a ring magnet (11) which is manufactured as an injection-moulded part, in particular composed of plastoferrite, and has a metal bush (12) which holds the ring magnet (11) in an interlocking manner, is pushed coaxially onto the rotation element (10) and is fixed on it such that it cannot move radially or axially, **characterized in that** a first ring section (111) of the ring magnet (11) is held on the bush (12), and a second ring section (112), which has a smaller internal diameter, of the ring magnet (11) is seated with a push fit on the rotation element (10), **in that** the interlock between the bush (12) and the first ring section (111) is produced by means of moulded elements (13, 14) which are attached to the external circumference of the bush (12) and on which the ring magnet (11) is moulded, and **in that** the bush (12) is mounted on the rotation element (10) in the area of a bush section (121) which projects from the end face of the ring magnet (11).

2. Sensor according to Claim 1, **characterized in that** a clearance fit is provided between the bush (12) and the rotation element (10).

3. Sensor according to Claim 1 or 2, **characterized in that** the bush section (121) is mounted on the rotation element (10) by means of at least spot welding of the end face (122) of the bush section (121) to the rotation element (10).

4. Sensor according to Claim 1 or 2, **characterized in that**, in order to mount the bush section (121) on the rotation element (10), the bush section (121) is pressed onto the rotation element (10) with a force fit.

5. Sensor according to Claim 4, **characterized in that** the pressing process is carried out by means of notches (17) which are stamped or knocked into the annular end face (122) of the bush section (121).

6. Sensor according to Claim 4, **characterized in that** the pressing process is carried out by means of a circumferential bead connection on the bush section (121), during which process beads (19) which are stamped out of the bush section (121), distributed radially over its circumference, are pressed into an annular groove (18) incorporated in the rotation element (10).

7. Sensor according to Claim 4, **characterized in that** the pressing process is carried out by means of a swaged connection, during which the free end of the bush section (121) is swaged into an annular groove (18) incorporated in the rotation element (10).

8. Sensor according to Claim 1 or 2, **characterized in that** the bush section (121) is mounted on the rotation element (10) by means of an interlock.

9. Sensor according to Claim 8, **characterized in that** the interlock is produced by means of a swaged connection, during which process the free end of the bush section (121) is swaged into a section which is stamped on the rotation element (10) and has at least one section surface (20) in the form of a secant.

10. Sensor according to one of Claim 1-9, **characterized in that** the moulded elements for production of the interlock between the metal bush (10) and the first ring section (111) of the ring magnet (11) are in the form of knurling, axial grooves (13) or a notched toothed system (14) or the like.

## Revendications

1. Capteur de rotation comprenant un générateur d'impulsions qui placé sur un élément de rotation (10), en particulier sur un arbre d'entraînement par moteur, présente un aimant torique (11) en forme de pièce moulée par injection, en particulier, en plastoferrite, et une douille métallique (12) recevant l'aimant torique (11) par complémentarité de forme, et poussée de manière coaxiale sur l'élément de rotation (10) pour y être fixée de manière inamovible radialement et axialement,
**caractérisé en ce que**
l'aimant torique (11) reçu par un premier segment annulaire (111) sur la douille (12) est placé avec un ajustement pressé sans jeu sur l'élément de rotation (10) par un second segment annulaire (112) présentant un diamètre intérieur plus petit, la complémentarité de forme est produite entre la douille (12) et le premier segment annulaire (111) par des éléments moulés (13, 14) usinés sur la périphérie extérieure de la douille (12) et sur lesquels l'aimant torique (11) est moulé par injection, et la douille est fixée sur l'élément de rotation (10) dans la zone d'un segment de douille (121) faisant saillie sur l'avant hors de l'aimant torique (11).

2. Sonde selon la revendication 1,
**caractérisée en ce qu'**
un ajustement avec jeu est prévu entre la douille (12) et l'élément de rotation (10).

3. Sonde selon la revendication 1 ou 2,
**caractérisée en ce que**
la fixation du segment de douille (121) sur l'élément de rotation (10) est réalisée par au moins un soudage ponctuel de la face avant (122) du segment de douille (121) sur l'élément de rotation (10).

4. Sonde selon la revendication 1 ou 2,
**caractérisée en ce que**
pour fixer le segment de douille (121) sur l'élément de rotation (10), le segment de douille (121) est pressé par complémentarité de force sur l'élément de rotation (10).

5. Sonde selon la revendication 4,
**caractérisée en ce que**
l'injection pressée est obtenue par des entailles (17) pressées ou enfoncées dans la face avant circulaire (122) du segment de douille (121).

6. Sonde selon la revendication 4,
**caractérisée en ce que**
l'injection pressée est obtenue au moyen d'un moulage périphérique du segment de douille (121), lors duquel des moulures (19) éjectées hors du segment de douille (121) de manière à être réparties radialement sur sa périphérie sont injectées dans une rainure annulaire (18) formée dans l'élément de rotation (10).

7. Sonde selon la revendication 4,
**caractérisée en ce que**
l'injection pressée est obtenue à l'aide d'un sertissage, lors duquel l'extrémité libre du segment de douille (121) est sertie dans une rainure annulaire (18) formée dans l'élément de rotation (10).

8. Sonde selon la revendication 1 ou 2,
**caractérisée en ce que**
la fixation du segment de douille (121) est réalisée sur l'élément de rotation (10) par complémentarité de forme.

9. Sonde selon la revendication 8,
**caractérisée en ce que**
la complémentarité de forme est produite à l'aide d'un sertissage, lors duquel l'extrémité libre du segment de douille (121) est sertie dans un segment matricé de l'élément de rotation (10) comportant au moins une surface de segment (20) en forme de sécante.

10. Sonde selon l'une quelconque des revendications 1 à 9,
**caractérisée en ce que**
les éléments moulés destinés à la production de la complémentarité de forme sont réalisés entre la douille métallique (10) et le premier segment annulaire (111) de l'aimant torique (11) sous forme de moletage, de rainures axiales (13) ou de dentelure (14) et autres.
